# EUROPEAN PATENT SPECIFICATION

(11) **EP 3 553 707 B1**
(45) Date of publication and mention of the grant of the patent: **11.10.2023**
(21) Application number: 17878993.9
(22) Date of filing: 07.11.2017
(51) Int. Cl.: G01V 5/00, A45C 13/42, G06K 7/10, G06K 7/14, G09F 3/02, G09F 3/00

(54) **LABEL FOR POSITIONING ITEM SUBJECTED TO SECURITY INSPECTION AND METHOD FOR POSITIONING ITEM SUBJECTED TO SECURITY INSPECTION**
ETIKETT ZUR POSITIONIERUNG EINES ARTIKELS ZUR SICHERHEITSÜBERPRÜFUNG UND VERFAHREN ZUR POSITIONIERUNG EINES ARTIKELS ZUR SICHERHEITSÜBERPRÜFUNG
ÉTIQUETTE DE POSITIONNEMENT D'ARTICLE SOUMIS À UNE INSPECTION DE SÉCURITÉ ET PROCÉDÉ DE POSITIONNEMENT D'ARTICLE SOUMIS À UNE INSPECTION DE SÉCURITÉ

(30) Priority: 08.12.2016 CN 201611123370
(43) Date of publication of application: 16.10.2019
(73) Proprietor: Nuctech Company Limited, Beijing 100084 (CN)
(72) Inventor: WANG, Qiang, Beijing 100084 (CN); HAN, Xilin, Beijing 100084 (CN); LIAO, Yuhua, Beijing 100084 (CN)
(74) Representative: Boult Wade Tennant LLP
(86) International application number: PCT/CN2017/109714
(87) International publication number: WO 2018/103486

(56) References cited:
- EP-A1- 2 436 333
- CN-A- 104 502 368
- CN-A- 106 133 506
- CN-A- 106 599 967
- CN-U- 204 422 778
- US-A1- 2012 093 367
- US-A1- 2012 114 103
- US-A1- 2014 226 796
- US-B1- 8 171 810

## Description

### FIELD

The present disclosure relates to the technical field of security inspection, and in particular to a label for positioning an item subjected to security inspection and a method for positioning an item subjected to security inspection.

### BACKGROUND

In civil aviation, railway, subway and other common safety inspection sites, due to a large number of people and packages, during security inspection of packages, a real-time imaging system of a security inspection machine often presents images in which the packages are connected with each other. At the same time, because of a great difference in an imaging mechanism between visible lights and the security inspection machine, a security inspector may not be able to distinguish, by images obtained by visible light imaging, the packages in the security inspection images in which the packages are connected with each other, so it is difficult to match between the packages in the security inspection image and the actual packages one by one. Currently, security situations are complex and changeable. In civil aviation airports, subway and other important sites, building multi-dimensional information of passengers can help an anti-terrorism department to identify dangerous information and prevent terrorist crimes in advance. An important part of building multi-dimensional passenger information is to bind security inspection information of packages carried by passengers into important sites with the packages. In existing methods, a RFID label is attached to a package through a RFID (Radio Frequency Identification) labelling machine, and a RFID identification system is integrated around the security inspection machine or inside the security inspection machine, so that the package with the RFID label can be identified in a coverage area of the RFID identification system, thereby the time that the package with the RFID label enters the security machine can be determined, and then the package can correspond to a security inspection image of the package However, if multiple packages with RFID labels enter the security inspection machine at the same time, it is still difficult to match between the security inspection images of the packages and the packages one by one.

D1 (US 2014/0226796 A1) disclosed an x-ray screening accessory. The x-ray screening accessory is provided comprising a bin including a marker. The marker comprises indicia having an x-ray readable component and a human visible component.

D2 (US 2012/0114103 A1) disclosed an x-ray inspection system. The x-ray inspection system includes inter alia of an initial inspection station, a secondary inspection station, and at least one transport bin. Each transport bin has a unique identifier. The initial inspection station has an x-ray unit for generating an x-ray image, device for reading the identification device of the transport bin, and device for assigning the x-ray image to the transport bin.

### SUMMARY

The embodiment of the present disclosure provides a label for positioning item subjected to security inspection and a method for positioning item subjected to security inspection, which can solve the above problem, i.e., it is unable to match between the security inspection images and items subjected to security inspection one by one in a complex environment.

In the first aspect, the present disclosure provides a system comprising a security inspection device and a label to be bound with an item subjected to security inspection and used for identifying the item subjected to security inspection, in accordance with claim 1.

In the second aspect, the present disclosure provides a method for identifying an item subjected to security inspection in accordance with claim 3.

The embodiment of the present disclosure provides a system comprising a security inspection device and a label for identifying an item subjected to security inspection and a method for identifying an item subjected to security inspection. The identifier in the present disclosure is displayed in the security inspection image when the item subjected to security inspection passes through the security inspection device, and the item subjected to security inspection is bound with the identifier before passing through the security inspection device. And then when the item subjected to security inspection passes through the security inspection device, the security inspection image including the identifier is formed in the security inspection device. After acquiring the security inspection image, the security inspection device obtains the identifier contained in the security inspection image by identifying the security inspection image. And then when the item subjected to security inspection needs to be identified, the security inspection device allows to compare and track the identifier recognized from the security inspection image and the identifier in the label bound with the item subjected to security inspection, so as to identify the item subjected to security inspection. In this way, in the case with complex environmental conditions or more security items, the individual items subjected to security inspection can be recognized from the security inspection image due to different identifiers of the items subjected to security inspection.

### BRIEF DESCRIPTION OF THE DRAWINGS

In order to illustrate the technical solution of the embodiments of the present disclosure more clearly, we will briefly introduce the appended drawings used in the embodiments of the present disclosure. Obviously, the figures described below are just some embodiments of the present disclosure, and for ordinary skill in the art, other drawings can also be obtained from these drawings without creative labor.
Fig. 1 is a schematic structural diagram of a label for positioning an item subjected to security inspection provided in accordance with an example of the present disclosure.
Fig. 2 shows a specific schematic structural diagram of the identifier in the label for positioning the item subjected to security inspection according to Fig. 1.
Fig. 3 shows another specific schematic structural diagram of the identifier in the label for positioning the item subjected to security inspection according to Fig. 1.
Fig. 4 shows still another specific schematic structural diagram of the identifier in the label for positioning the item subjected to security inspection according to Fig. 1.
Fig. 5 shows yet another specific schematic structural diagram of the identifier in the label for positioning the item subjected to security inspection according to Fig. 1.
Fig. 6 shows a schematic structural diagram of a label for positioning the item subjected to security inspection provided in accordance with another embodiment of the present disclosure.
Fig. 7 is a schematic flow chart of a method for positioning the item subjected to security inspection provided in accordance with an embodiment of the present disclosure.
Fig. 8 is a schematic flow chart of a method for positioning the item subjected to security inspection provided in accordance with another embodiment of the present disclosure.

### DETAILED DESCRIPTION

The features and exemplary embodiments of various aspects of the present disclosure will be described in detail below. In the following detailed description, many specific details are presented in order to provide a comprehensive understanding of the present disclosure. However, it is obvious to those skilled in the art that the present disclosure can be implemented without some of these specific details. The following description of the embodiments is merely intended to provide a better understanding of the present disclosure by illustrating examples of the present disclosure. The present disclosure is not limited to any specific configuration and algorithm proposed below, but covers any modification, replacement and improvement of elements, components and algorithms without departing from the present disclosure. In the appended drawings and the following description, well-known structures and techniques are not shown in order to avoid unnecessary ambiguity of the present disclosure.

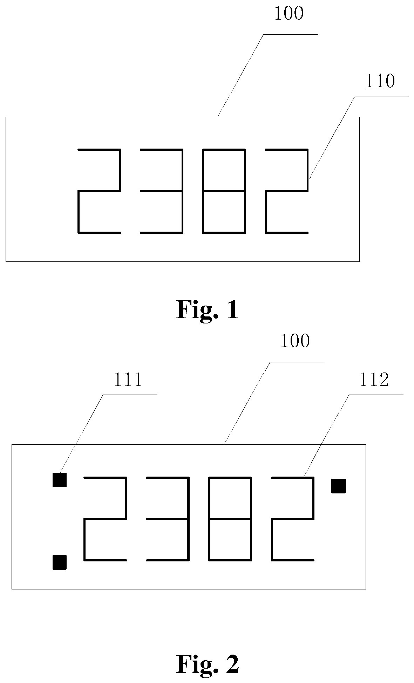

Fig. 1 shows a schematic structural diagram of a label 100 for positioning an item subjected to security inspection. The label 100 in Fig. 1 does not embody the present invention. It is bound with the item subjected to security inspection, and includes an identifier 110. The identifier 110 is used for uniquely identifying label, and the identifier 110 can be displayed in the security inspection image when passing through a security inspection device.

In accordance with embodiments of the present invention, the identifier 110 includes a positioning point 111 and a character 112. Fig. 2 shows a specific schematic structural diagram of the identifier 110 in the label 100 for positioning the item subjected to security inspection according to Fig. 1. As shown in Fig. 2, the identifier 110 includes the positioning point 111 and the character 112, and the identifier 110 shown in Fig. 1 includes the character 112, where the character 112 is a digital character in a 7-segment digital format.

It should be noted that the number of characters is not limited, the character 112 may be a number, a letter, a symbol, etc., and a combination thereof.

As a possible embodiment, the identifier 110 includes both a plurality of positioning points 111 and the character 112, the plurality of positioning points 111 are arranged based on a preset pattern, and the character 112 is disposed adjacent to the plurality of positioning points 111. As shown in Fig. 2, there are three positioning points 111, which form a triangle, and the character 112 is disposed adjacent to the three positioning points 111. As such, when identifying the identifier 110, an image area of the identifier can be identified from the security inspection image based on the shape of the three positioning points 111, so as to improve the accuracy of the identification for the identifier.

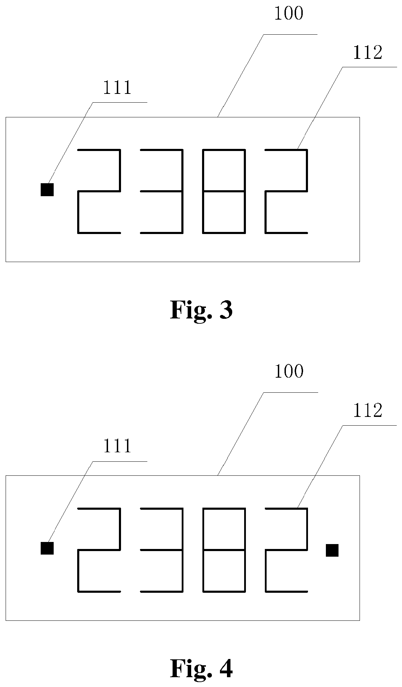

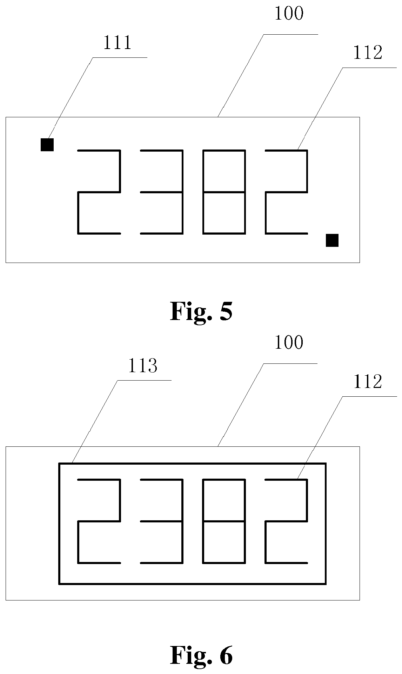

As another possible embodiment, the identifier 110 includes both the positioning points 111 and the character 112, and the positioning point 111 is located at a beginning and/or ending position of the identifier 110. Fig. 3 shows another specific schematic structural diagram of the identifier 110 in the label 100 for positioning the item subjected to security inspection according to Fig. 1. As shown in Fig. 3, the positioning point 111 is located at the beginning position of the identifier 110, so that a correct sequence of identifier 110 can be identified by the positioning point 111 to avoid the error of the identified identifier 110 caused by the sequence error of the identifier 110 when identifying the identifier 110. Fig. 4 shows still another specific schematic structural diagram of the identifier 110 in the label 100 for positioning the item subjected to security inspection according to Fig. 1. As shown in Fig. 4, two positioning points 111 are respectively located at the beginning and ending positions of the identifier 110, as such an exact position and sequence of the identifier 110 can be identified through the positioning point 111 to avoid the error of the identified identifier 110 caused by the sequence error of the identifier 110 when identifying the identifier 110. Fig. 5 shows yet another specific schematic structural diagram of the identifier 110 in the label 100 for positioning the item subjected to security inspection according to Fig. 1. As shown in Fig. 5, two positioning points 111 are respectively located at the beginning and ending positions of the identifier 110, and two identifier 110 are disposed diagonally, which have the same function as those in Fig. 2, Fig. 3 and Fig. 4.

It should be noted that the positioning point 111 shown in Figs. 2, 3, 4, or 5 is the implementation of the positioning point 111 in the embodiments of the present disclosure. The positioning point 111 in other examples of the present disclosure not covered by the claims may also be implemented in other ways, for example, the positioning point 111 is circular.

Fig. 6 shows a schematic structural diagram of a label 100 for positioning item subjected to security inspection provided in accordance with another example of the present disclosure not covered by the claims. As shown in Fig. 6, an identifier 110 includes an identification block 113 and a character 112 The identification block 113 is disposed around the character 112, and the character 112 is surrounded by the identification block 113. As such, when identifying the identifier 110, the image area of the identifier can be identified from the security inspection image based on the shape of the identification block 113, so as to improve the accuracy of the identification for the identifier.

It should be noted that the identification block 113 shown in Fig. 6 is only one implementation of the identification block 113 in the examples of the present disclosure, and the identification block 113 in the examples of the present disclosure may also be implemented in other ways, for example, the identification box 113 may have other shapes, or the identification box 113 is a border semi-enclosing the character 112, etc.

It should be noted that in the above embodiments, the formats and the number of the characters 112 can be set according to specific scenes, and the character 112 shown in Figs. 2, 3, 4, 5, or 6 is only one implementation of the character 112 in the embodiments of the present disclosure.

In the embodiment, since the identifier 110 is displayed in the security inspection image when passing through the security inspection device, a material of the identifier 110 needs to be a material capable of imaging under radiation of the security inspection device, including lead or iron.

It should be noted that in the embodiment of the present disclosure, the way in which the label 100 binds with the item subjected to security inspection includes any way that can be implemented, for example, fixing the label 100 directly on the item subjected to security inspection, or fixing the label 100 on a luggage tray and placing the item subjected to security inspection in the luggage tray to allow the binding between the label 100 and the item subjected to security inspection, etc., which will not be described in more details here.

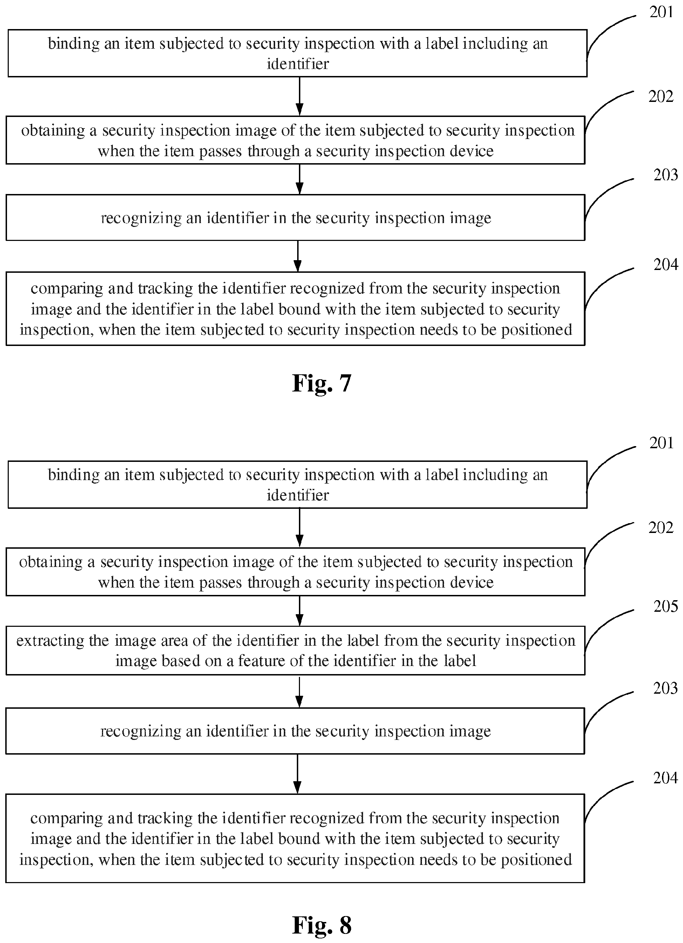

Fig. 7 shows a schematic flow chart of a method 200 for identifying an item subjected to security inspection. The method 200 may be used in the scenes of security inspection for the item subjected to security inspection using the label shown in Figs. 1 to 3. The method 200 includes the following steps: 201, binding an item subjected to security inspection with a label including an identifier; 202, obtaining a security inspection image of the item subjected to security inspection when the item passes through a security inspection device; 203, recognizing an identifier in the security inspection image; and 204, comparing and tracking the identifier recognized from the security inspection image and the identifier in the label bound with the item subjected to security inspection, when the item subjected to security inspection needs to be positioned.

At step 201, the item subjected to security inspection is bound with the identifier before security inspection. The identifier uniquely identifies the item subjected to security inspection.

At step 202, when the item subjected to security inspection passes through the security inspection device, the security inspection device obtains the security inspection image under the radiation of the security inspection device, and the identifier is also imaged on the security inspection image, so the image of the identifier is included in the security inspection image.

At step 203, after obtaining the security inspection image including the identifier, it is necessary to position the item subjected to security inspection in the security inspection image according to the identifier, identify the identifier in the image area, and obtain the identifier included in the security inspection image.

It should be noted that, the method of recognizing identifiers in an image may be any method that can be implemented. For example, in the embodiment of the present disclosure, the identifier in the image area is identified by a LeNet5 convolution neural network.

At step 204, when the item subjected to security inspection needs to be positioned, the item subjected to security inspection is tracked based on the identifier recognized and the identifier in the label.

It should be noted that, when the label is used for security inspection, in order to make the identifier clearly imaged in the security inspection image, an identification surface of the label setting the identifier can be disposed perpendicularly to a ray in the security inspection device.

In the embodiment of the present disclosure, the item subjected to security inspection are bound with the identifier before the item subjected to security inspection passes through the security inspection device, and when the item subjected to security inspection passes through the security inspection device, the security inspection image including the identifier is also formed in the security inspection device. After the security inspection image is obtained by the security inspection device, the identifier included in the security inspection image is obtained by the identification of the security inspection image. When the item subjected to security inspection needs to be identified, the security inspection device allows to compare and track the identifier recognized from the security inspection image and the identifier in the label bound with the item subj ected to security inspection, so as to identify the item subjected to security inspection. In this way, in the case with complex environmental conditions or more security items, the individual items subjected to security inspection can be recognized from the security inspection image due to different identifiers of the items subjected to security inspection.

As an optional embodiment, step 203 can be specifically implemented as following steps: recognizing a predicted identifier corresponding to the identifier in the security inspection image and the probability of the predicted identifier of the undetermined value as the identifier in the security inspection image, based on the LeNet5 convolution neural network algorithm; and matching between structural characteristics of the identifier in the security inspection image and structural characteristics of the predicted identifier; identifying the predicted identifier being the identifier in the security inspection image, when the structural characteristics of the predicted identifier match the structural characteristics of the identifier in the security inspection image.

Specifically, in the embodiment of the present disclosure, an improved LeNet5 can also employed to recognize the identifier in the image. Based on the LeNet5 convolution network identification, the predicted identifier corresponding to the identifier in the security inspection image and the probability of the predicted identifier of the undetermined value being the identifier in the security inspection image, that is, the probability of being the characters in the identifier, are determined at a output layer, and the character that may be in the identifier is processed according to the structural characteristics thereof. For example, assuming the real character is 8 and the LeNet5 convolution network determines that the probability of the character in the identifier being 0 is relatively high, then a middle position of the character in the image area can be recognized, and it may be determined whether the middle position of the character in the image area has the imaging of the character. The structure of the imaging at the middle position of the character in the image area can be further determined. If the middle position of the character in the image area has the imaging of the character, it means that the character in the identifier is not 0, and thus 0 can be excluded. If the structure of the imaging at the middle position of the character in the image area is the same as that at the middle position of the character 8, it means that the character in the identifier is 8. Thus the accuracy of recognition is increased by the improved LeNet5. For example, there will be no horizontal strokes at the top of the image of character 4 in the figure above.

It should be noted that, when matching between the structural characteristics of the predicted identifiers and the identifiers in the security inspection image, the predicted identifiers are sorted according to the probability from a high probability to a low probability, and then the matching may be performed between the structural characteristics of the predicted identifier and the identifiers in the security inspection image sequentially from a high probability to a low probability.

In the embodiment of the present disclosure, the method of recognizing the identifiers in the security inspection image can also include other methods that can be implemented, such as template matching, K mean method, Blob feature recognition method, Shape Context and so on, which is not to be limited here.

Fig. 8 shows a schematic flow chart of a method 200 for positioning an item subjected to security inspection in accordance with another embodiment of the present disclosure. The steps 201-204 shown in Fig. 8 are substantially the same as the steps 201-204 involved in the method shown in Fig. 4, but the difference is that before step 203, the method 200 can also include: step 205, extracting the image area of the identifier in the label from the security inspection image based on a feature of the identifier in the label.

In the method 200, at step 203, for recognizing the identifier in the security inspection image, the image of the item subjected to security inspection and the label are included in the security inspection image. If the identifier in the security inspection image is directly identified, it is necessary to process the whole security inspection image, thus not only the identification process is complex, but also the identification accuracy is reduced. Therefore, at step 205, the image area of the identifier in the label is extracted from the security inspection image based on the feature of the identifier in the label, and after the image area corresponding to the identifier in the security inspection image is extracted, the identifier in the image area is recognized. Because the image area after label imaging is much smaller than the whole security inspection image, the complexity of the recognition process can be reduced by only performing the recognition on the extracted image area. Also, the noise in the image area is less than the noised in the whole security inspection image, and thus the accuracy of the recognition can be improved.

Specifically, the extracting the image area of the label identifier from the security inspection image based on the character of the identifier in the label includes: extracting the image area based on a pixel value and/or a gray value of the identifier in the label in the security inspection image, and extracting the image area based on a shape and/or a position of the identifier in the label in the security inspection image.

The pixel value or the gray value of the identifier in the security inspection image are all determined values or within a certain range. For example, when the identifier is made of lead, because the lead absorbs a lot of X rays, the gray value obtained from the security inspection image formed by the X rays is low, and the gray value is substantially less than 15000.The value range for a single pixel is [0-65535].

When the image area is extracted based on the pixel value and/or the gray value of the identifier in the label in the security inspection image, threshold segmentation of the security inspection image is performed based on the pixel value and/or the gray value of the image area in the security inspection image to obtain candidate areas, and the candidate area which does not meet the requirements is removed. When the image area is extracted based on the shape and/or the position of the identifier in the label in the security inspection image, it is possible to identify the area in the security inspection image that can conform to the shape or position characteristics of the identifier. For example, if the positioning points of the identifier forms a triangle, then an area forming a triangle can be identified in the security inspection image. For example, if the positioning point is included at the beginning of the identifier, then an area which has an end including a point image can be identified, etc.

It should be noted that, in the embodiment of the present disclosure, the image area can also be extracted based on other features of the identifier in the label, for example, the size, concavity and convexity of the identifier in the label, etc.

It should be noted that, in the embodiment of the present disclosure, the four methods for extracting the image area of the identifier above can be combined freely, or the method for extracting the image area of the identifier can be selected according to the features of the identifier, which will not be described in more details here.

As an optional embodiment, the method of binding the item subjected to security inspection and the label including the identifiers can include: install the label on the luggage tray; and place the item subjected to security inspection on the luggage tray to allow the binding of the item subjected to security inspection and the label.

As such, when the label is installed on a hand rest part of the luggage tray, if there are multiple luggage trays entering the security inspection device continuously in the sequence of the hand rest parts entering the security inspection device, the identifiers can be used as distinguishing boundaries of the multiple luggage trays.

The functional blocks shown in the structural block diagram described above can be implemented as hardware, software, firmware or a combination thereof. When implemented in hardware, it can be electronic circuits, application specific integrated circuits (ASIC), appropriate firmware, plug-ins, function cards, etc. When implemented in a software manner, the elements of the present disclosure are programs or code segments used to perform the required tasks. Programs or code segments can be stored in machine-readable media, or transmitted on transmission media or communication links through data signals carried in carriers. "Machine-readable media" may include any medium capable of storing or transmitting information. Examples of machine readable media include electronic circuits, semiconductor memory devices, ROM, flash memory, erasable ROM (EROM), floppy disk, CD-ROM, optical disk, hard disk, optical fiber medium, radio frequency (RF) link, etc. Code segments can be downloaded via computer networks such as the Internet and the Intranet.

The present disclosure can be realized in other specific forms without departing from its essential features. For example, the algorithm described in a particular embodiment may be modified, and the system architecture does not depart from the present disclosure. Therefore, the current embodiments are regarded as exemplary rather than restrictive in all respects. The scope of the present disclosure is defined by the appended claims rather than the above descriptions, and falls into the meaning of the claims and all changes within the scope of the equivalent, thus being included in the scope of the present disclosure.

## Claims

1. A system comprising a security inspection device and a label (100) to be bound with an item subjected to security inspection and used for identifying the item subjected to security inspection, including an identifier (110) for uniquely identifying the label, wherein the security inspection device is configured to obtain a security inspection image of the item subjected to security inspection and recognize the identifier (110) in the security inspection image, when the item subjected to security inspection passes through the security inspection device, the system being further configured such that it allows tracking the item subjected to security inspection based on the comparison of the identifier recognized from the security inspection image and the identifier in the label bound with the item subjected to security inspection, when the item needs to be identified, the label being further such that the identifier (110) includes a character (112) and either exactly a single positioning point located at a beginning position or an ending position of the identifier, exactly first and second positioning points located at a beginning position and an ending position of the identifier, or exactly three positioning points arranged based on a preset pattern, and the character is disposed adjacent to the three positioning points;
a material of the or each positioning point (111) and the character (112) of the identifier (110) is a material capable of imaging under radiation of the security inspection device;
and the security inspection device being further configured to extract an image region of the identifier in the label (100) from the security inspection image, based on a shape and/or position of the identifier in the label (100), and to recognize the identifier in the extracted image region.

2. The system of claim 1, wherein the identifier (110) is made of lead or iron.

3. A method for identifying an item subjected to security inspection, including:
binding (201) the item subjected to security inspection with a label (100) including an identifier (110) for uniquely identifying the label;
obtaining (202) a security inspection image of the item subjected to security inspection when the item subjected to security inspection passes through a security inspection device;
recognizing (203) an identifier (110) in the security inspection image; and
tracking (204) the item subjected to security inspection based on the comparison of the identifier (110) recognized from the security inspection image and the identifier (110) in the label (100) bound with the item subjected to security inspection, when the item subjected to security inspection needs to be identified the method being such that the identifier (110) includes a character (112) and either exactly a single positioning point located at a beginning position or an ending position of the identifier, exactly first and second positioning points located at a beginning position and an ending position of the identifier, or exactly three positioning points arranged based on a preset pattern, and the character is disposed adjacent to the three positioning points, and further wherein a material of the or each positioning point (111) and the character (112) of the identifier (110) is a material capable of imaging under radiation of the security inspection device, the method being further including:
extracting an image region of the identifier in the label (100) from the security inspection image, based on a shape and/or position of the identifier in the label (100); and
recognizing the identifier in the extracted image region.

4. The method of claim 3, wherein before recognizing (203) the identifier (110) in the security inspection image, the method further includes:
extracting (205) an image region of the identifier (110) in the label (100) from the security inspection image based on a feature of the identifier (110) in the label (100).

5. The method of claim 4, wherein the extracting (205) an image region of the identifier (110) in the label (100) from the security inspection image based on a feature of the identifier (110) in the label (100) includes:
extracting the image region based on a pixel value and/or a gray value of the identifier (110) in the label (100) in the security inspection image.

6. The method of claim 3, wherein the binding (201) the item subjected to security inspection with a label (100) including an identifier (110) includes:
installing the label (100) on a luggage tray; and
placing the item subjected to security inspection on the luggage tray to allow the binding of the item subjected to security inspection and the label (100).

7. The method of claim 3, wherein the recognizing (203) an identifier (110) in the security inspection image includes:
recognizing a predicted identifier (110) corresponding to the identifier (110) in the security inspection image and a probability of the predicted identifier (110) with an undetermined value being the identifier (110) in the security inspection image, based on a LeNet5 convolution neural network algorithm;
matching between structural characteristics of the identifier (110) in the security inspection image and structural characteristics of the predicted identifier (110); and
identifying the predicted identifier (110) being the identifier in the security inspection image, when the structural characteristics of the predicted identifier (110) match the structural characteristics of the identifier (110) in the security inspection image.

8. The method of claim 3, wherein an identification surface of the label (100) setting the identifier (110) is disposed perpendicularly to a ray in the security inspection device.

## Patentansprüche

1. System, das eine Sicherheitsprüfungsvorrichtung und ein Etikett (100) umfasst, das an einen Artikel, der einer Sicherheitsprüfung unterzogen wird, gebunden werden soll und für eine Identifikation des Artikels, der einer Sicherheitsprüfung unterzogen wird, verwendet wird, und das eine Kennung (110) zum eindeutigen Identifizieren des Etiketts enthält, wobei die Sicherheitsprüfungsvorrichtung ausgestaltet ist, ein Sicherheitsprüfungsbild des Artikels, der einer Sicherheitsprüfung unterzogen wird, zu erhalten und die Kennung (110) im Sicherheitsprüfungsbild zu erkennen, wenn der Artikel, der einer Sicherheitsprüfung unterzogen wird, die Sicherheitsprüfungsvorrichtung durchläuft, wobei das System ferner ausgestaltet ist, so dass es ein Nachverfolgen des Artikels, der einer Sicherheitsprüfung unterzogen wird, basierend auf dem Vergleich der Kennung, die aus dem Sicherheitsprüfungsbild erkannt wird, und der Kennung im Etikett, das an den Artikel, der einer Sicherheitsprüfung unterzogen wird, gebunden ist, erlaubt, wenn der Artikel identifiziert werden muss, wobei das Etikett ferner so ist, dass die Kennung (110) ein Zeichen (112) und entweder exakt einen einzelnen Positionspunkt, der an einer Anfangsposition oder einer Endposition der Kennung positioniert ist, exakt einen ersten und zweiten Positionspunkt, der an einer Anfangsposition und einer Endposition der Kennung positioniert ist, oder exakt drei Positionspunkte, die basierend auf einem voreingestellten Muster angeordnet sind, enthält, und wobei das Zeichen angrenzend an die drei Positionspunkte angeordnet ist;
wobei ein Material des oder eines jeden Positionspunkts (111) und das Zeichen (112) der Kennung (110) ein Material ist, das zu Bildgebung unter Strahlung der Sicherheitsprüfungsvorrichtung fähig ist;
und wobei die Sicherheitsprüfungsvorrichtung ferner ausgestaltet ist, einen Bildbereich der Kennung im Etikett (100) aus dem Sicherheitsprüfungsbild zu extrahieren, basierend auf einer Form und/oder einer Position der Kennung im Etikett (100), und die Kennung im extrahierten Bildbereich zu erkennen.

2. System nach Anspruch 1, wobei die Kennung (110) aus Blei oder Eisen hergestellt ist.

3. Verfahren zum Identifizieren eines Artikels, der einer Sicherheitsprüfung unterzogen wird, enthaltend:
Binden (201) eines Etiketts (100), das eine Kennung (110) zum eindeutigen Identifizieren des Etiketts enthält, an den Artikel, der einer Sicherheitsprüfung unterzogen wird;
Erhalten (202) eines Sicherheitsprüfungsbildes des Artikels, der einer Sicherheitsprüfung unterzogen wird, wenn der Artikel, der einer Sicherheitsprüfung unterzogen wird, eine Sicherheitsprüfungsvorrichtung durchläuft;
Erkennen (203) einer Kennung (110) im Sicherheitsprüfungsbild; und
Nachverfolgen (204) des Artikels, der einer Sicherheitsprüfung unterzogen wird, basierend auf dem Vergleich der Kennung (110), die aus dem Sicherheitsprüfungsbild erkannt wird, und der Kennung (110) im Etikett (100), das an den Artikel, der einer Sicherheitsprüfung unterzogen wird, gebunden ist, wenn der Artikel, der einer Sicherheitsprüfung unterzogen wird, identifiziert werden muss, wobei das Verfahren so ist, dass die Kennung (110) ein Zeichen (112) und entweder exakt einen einzelnen Positionspunkt, der an einer Anfangsposition oder einer Endposition der Kennung positioniert ist, exakt einen ersten und zweiten Positionspunkt, der an einer Anfangsposition und einer Endposition der Kennung positioniert ist, oder exakt drei Positionspunkte, die basierend auf einem voreingestellten Muster angeordnet sind, enthält, und wobei das Zeichen angrenzend an die drei Positionspunkte angeordnet ist;
und ferner wobei ein Material des oder eines jeden Positionspunkts (111) und das Zeichen (112) der Kennung (110) ein Material ist, das zu Bildgebung unter Strahlung der Sicherheitsprüfungsvorrichtung fähig ist, wobei das Verfahren ferner enthält:
Extrahieren eines Bildbereichs der Kennung im Etikett (100) aus dem Sicherheitsprüfungsbild, basierend auf einer Form und/oder einer Position der Kennung im Etikett (100); und
Erkennen der Kennung im extrahierten Bildbereich.

4. Verfahren nach Anspruch 3, wobei vor dem Erkennen (203) der Kennung (110) in dem Sicherheitsprüfungsbild, das Verfahren ferner enthält:
Extrahieren (205) eines Bildbereichs der Kennung (110) im Etikett (100) aus dem Sicherheitsprüfungsbild basierend auf einem Merkmal der Kennung (110) im Etikett (100).

5. Verfahren nach Anspruch 4, wobei das Extrahieren (205) eines Bildbereichs der Kennung (110) im Etikett (100) aus dem Sicherheitsprüfungsbild basierend auf einem Merkmal der Kennung (110) im Etikett (100) enthält:
Extrahieren des Bildbereichs basierend auf einem Pixelwert und/oder einem Grauwert der Kennung (110) im Etikett (100) im Sicherheitsprüfungsbild.

6. Verfahren nach Anspruch 3, wobei das Binden (201) eines Etiketts (100), das eine Kennung (110) enthält, an den Artikel, der einer Sicherheitsprüfung unterzogen wird, enthält:
Anbringen des Etiketts (100) an einer Gepäckablage; und
Platzieren des Artikels, der einer Sicherheitsprüfung unterzogen wird, auf der Gepäckablage, um das Binden des Etiketts (100) an den Artikel, der einer Sicherheitsprüfung unterzogen wird, zu ermöglichen.

7. Verfahren nach Anspruch 3, wobei das Erkennen (203) einer Kennung (110)im Sicherheitsprüfungsbild enthält:
Erkennen einer vorhergesagten Kennung (110), die der Kennung (110) im Sicherheitsprüfungsbild entspricht, und einer Wahrscheinlichkeit der vorhergesagten Kennung (110) mit einem unbestimmten Wert, der die Kennung (110) im Sicherheitsprüfungsbild ist, basierend auf einem LeNet5-Convolution-Neural-Network-Algorithmus;
Abgleichen zwischen strukturellen Eigenschaften der Kennung (110) im Sicherheitsprüfungsbild und strukturellen Eigenschaften der vorhergesagten Kennung (110); und
Identifizieren der vorhergesagten Kennung (110) als Kennung im Sicherheitsprüfungsbild, wenn die strukturellen Eigenschaften der vorhergesagten Kennung (110) den strukturellen Eigenschaften der Kennung (110) im Sicherheitsprüfungsbild entsprechen.

8. Verfahren nach Anspruch 3, wobei eine Identifikationsfläche des Etiketts (100), die die Kennung (110) festlegt, lotrecht zu einem Strahl in der Sicherheitsprüfungsvorrichtung angeordnet ist.

## Revendications

1. Système comprenant un dispositif d'inspection de sécurité et une étiquette (100) destinée à être liée à un article soumis à une inspection de sécurité et utilisée pour identifier l'article soumis à une inspection de sécurité, comprenant un identifiant (110) pour identifier de manière unique l'étiquette, dans lequel le dispositif d'inspection de sécurité est configuré pour obtenir une image d'inspection de sécurité de l'article soumis à une inspection de sécurité et reconnaître l'identifiant (110) dans l'image d'inspection de sécurité, lorsque l'article soumis à une inspection de sécurité passe à travers le dispositif d'inspection de sécurité, le système étant en outre configuré de sorte qu'il permette de suivre l'article soumis à une inspection de sécurité sur la base de la comparaison entre l'identifiant reconnu à partir de l'image d'inspection de sécurité et l'identifiant dans l'étiquette liée à l'article soumis à une inspection de sécurité, lorsque l'article doit être identifié, l'étiquette étant en outre, telle que l'identifiant (110) comprend un caractère (112) et exactement un seul point de positionnement situé à une position de début ou à une position de fin de l'identifiant, exactement des premier et deuxième points de positionnement situés à une position de début et à une position de fin de l'identifiant, ou exactement trois points de positionnement agencés sur la base d'un motif prédéfini, et le caractère est disposé de manière adjacente aux trois points de positionnement ;
un matériau du ou de chaque point de positionnement (111) et du caractère (112) de l'identifiant (110) est un matériau capable de former une image sous le rayonnement du dispositif d'inspection de sécurité ; et
le dispositif d'inspection de sécurité étant en outre configuré pour extraire une région d'image de l'identifiant dans l'étiquette (100) à partir de l'image d'inspection de sécurité, sur la base d'une forme et/ou d'une position de l'identifiant dans l'étiquette (100), et pour reconnaître l'identifiant dans la région d'image extraite.

2. Système de la revendication 1, dans lequel l'identifiant (110) est réalisé en plomb ou fer.

3. Procédé d'identification d'un article soumis à une inspection de sécurité, comprenant les étapes consistant à :
lier (201) l'article soumis à une inspection de sécurité à une étiquette (100) comprenant un identifiant (110) pour identifier de manière unique l'étiquette ;
obtenir (202) une image d'inspection de sécurité de l'article soumis à une inspection de sécurité lorsque l'article soumis à une inspection de sécurité passe à travers un dispositif d'inspection de sécurité ;
reconnaître (203) un identifiant (110) dans l'image d'inspection de sécurité ; et
suivre (204) l'article soumis à une inspection de sécurité sur la base de la comparaison entre l'identifiant (110) reconnu à partir de l'image d'inspection de sécurité et l'identifiant (110) dans l'étiquette (100) liée à l'article soumis à une inspection de sécurité, lorsque l'article soumis à une inspection de sécurité doit être identifié, le procédé étant tel que l'identifiant (110) comprend un caractère (112) et exactement un seul point de positionnement situé à une position de début ou à une position de fin de l'identifiant, exactement des premier et deuxième points de positionnement situés à une position de début et à une position de fin de l'identifiant, ou exactement trois points de positionnement agencés sur la base d'un motif prédéfini, et le caractère est disposé de manière adjacente aux trois points de positionnement,
et en outre dans lequel un matériau du ou de chaque point de positionnement (111) et du caractère (112) de l'identifiant (110) est un matériau capable de former une image sous le rayonnement du dispositif d'inspection de sécurité, le procédé comprenant en outre les étapes consistant à :
extraire une région d'image de l'identifiant dans l'étiquette (100) à partir de l'image d'inspection de sécurité, sur la base d'une forme et/ou d'une position de l'identifiant dans l'étiquette (100) ; et
reconnaître l'identifiant dans la région d'image extraite.

4. Procédé de la revendication 3, dans lequel avant de reconnaître (203) l'identifiant (110) dans l'image d'inspection de sécurité, le procédé comprend en outre l'étape consistant à :
extraire (205) une région d'image de l'identifiant (110) dans l'étiquette (100) à partir de l'image d'inspection de sécurité sur la base d'une caractéristique de l'identifiant (110) dans l'étiquette (100).

5. Procédé de la revendication 4, dans lequel l'extraction (205) d'une région d'image de l'identifiant (110) dans l'étiquette (100) à partir de l'image d'inspection de sécurité sur la base d'une caractéristique de l'identifiant (110) dans l'étiquette (100) comprend :
l'extraction de la région d'image sur la base d'une valeur de pixel et/ou d'une valeur de gris de l'identifiant (110) dans l'étiquette (100) dans l'image d'inspection de sécurité.

6. Procédé de la revendication 3, dans lequel la liaison (201) de l'article soumis à une inspection de sécurité avec une étiquette (100) comprenant un identifiant (110) comprend :
l'installation de l'étiquette (100) sur un plateau à bagages ; et
la mise en place de l'article soumis à une inspection de sécurité sur le plateau à bagages pour permettre la liaison de l'article soumis à l'inspection de sécurité et de l'étiquette (100) .

7. Procédé de la revendication 3, dans lequel la reconnaissance (203) d'un identifiant (110) dans l'image d'inspection de sécurité comprend :
la reconnaissance d'un identifiant prédit (110) correspondant à l'identifiant (110) dans l'image d'inspection de sécurité et d'une probabilité que l'identifiant prédit (110) avec une valeur indéterminée soit l'identifiant (110) dans l'image d'inspection de sécurité, sur la base d'un algorithme de réseau neuronal à convolution LeNet5 ;
la mise en correspondance entre des caractéristiques structurelles de l'identifiant (110) dans l'image d'inspection de sécurité et des caractéristiques structurelles de l'identifiant prédit (110) ; et
l'identification de l'identifiant prédit (110) comme étant l'identifiant dans l'image d'inspection de sécurité, lorsque les caractéristiques structurelles de l'identifiant prédit (110) correspondent aux caractéristiques structurelles de l'identifiant (110) dans l'image d'inspection de sécurité.

8. Procédé de la revendication 3, dans lequel une surface d'identification de l'étiquette (100) portant l'identifiant (110) est disposée perpendiculairement à un rayon dans le dispositif d'inspection de sécurité.
